(19) Europäisches Patentamt
European Patent Office
Office européen des brevets

(11)  **EP 2 927 678 B1**

(12)  **EUROPEAN PATENT SPECIFICATION**

(45) Date of publication and mention
of the grant of the patent:
**21.02.2018  Bulletin 2018/08**

(51) Int Cl.:
***G01N 27/82*** *(2006.01)*      ***F17D 5/00*** *(2006.01)*
***G01N 27/90*** *(2006.01)*

(21) Application number: **14832478.3**

(22) Date of filing: **31.03.2014**

(86) International application number:
**PCT/RU2014/000226**

(87) International publication number:
**WO 2015/016742 (05.02.2015 Gazette 2015/05)**

(54) **MAGNETIC MEASURING SYSTEM FOR A FLAW DETECTOR HAVING LONGITUDINAL MAGNETIZATION**

MAGNETISCHES MESSSYSTEM FÜR EINEN FEHLSTELLENDETEKTOR MIT LÄNGSMAGNETISIERUNG

SYSTÈME DE MESURE MAGNÉTIQUE POUR DÉFECTOSCOPE À MAGNÉTISATION LONGITUDINALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2013  RU 2013135543**

(43) Date of publication of application:
**07.10.2015  Bulletin 2015/41**

(73) Proprietors:
• **Public Joint Stock Company "Transneft"**
**Moscow 119180 (RU)**
• **Joint Stock Company "Transneft Diascan"**
**g. Lukhovitsy, Moskovskaya obl. 140501 (RU)**

(72) Inventors:
• **MIROSHNIK, Aleksandr Dmitrievich**
**Moskovskaya obl. 140406 (RU)**
• **GURIN, Sergei Fedorovich**
**Moskovskaya obl. 140409 (RU)**
• **KRASNOV, Aleksandr Aleksandrovich**
**Moskovskaya obl. 140411 (RU)**
• **LAPIN, Mikhail Valeryevich**
**Moskovskaya obl. 140500 (RU)**

• **MIKHNEV, Boris Nikolaevich**
**Moskovskaya obl. 140402 (RU)**

(74) Representative: **Glawe, Delfs, Moll**
**Partnerschaft mbB**
**von Patent- und Rechtsanwälten**
**Postfach 13 03 91**
**20103 Hamburg (DE)**

(56) References cited:
| EP-A2- 0 321 013 | EP-A2- 1 033 571 |
| RU-C1- 2 334 980 | RU-C1- 2 455 625 |
| US-A- 5 532 587 | US-A- 5 864 232 |
| US-A1- 2002 027 437 | US-A1- 2002 149 360 |
| US-A1- 2007 022 830 | US-A1- 2011 167 914 |
| US-A1- 2012 206 132 | US-A1- 2013 068 028 |
| US-B1- 6 847 207 | US-B2- 7 295 003 |

• **JAVIER GARCÍA-MARTÍN ET AL:**
**"Non-destructive techniques based on eddy current testing", SENSORS, M D P I AG, CH, vol. 11, no. 3, 28 February 2011 (2011-02-28), pages 2525-2565, XP002718104, ISSN: 1424-8220, DOI: 10.3390/S110302525**

EP 2 927 678 B1

## Description

The claimed invention relates to the field of magnetic flaw detection, to devices for n on-destructive testing of pipelines and is aimed at a magnetic measuring system of an in-line flaw detector.

Magnetic measuring systems for an in-pipeline flaw detector and flaw-inspection devices by eddy currents are known in the prior art, see e.g. US 2011/167914 A1 and US 2002/027437 A1. The magnetic measuring system of the invention as defined in attached claim 1 differs from said prior art, *inter alia,* in that there is an additional voltage phase shift of 30-40° between the active and reference inductive coils of the eddy current sensor. A combined magnetic flaw detector with longitudinal magnetization (pipeline inspection apparatus) is known from GB Patent 2376077A (CJSC "NGKS"), published on 26.12.2000), which performs the functions of: flaw identification in a stray field arising in flaw locations; association of a flaw with the pipe inner wall; indication of deformations in a pipe inner wall geometry, which are related to dents, transverse welds, etc., by two rings with sensor units arranged on individual sections connected by a Cardan suspension. The main drawback of this solution is that the rings with the sensor units are arranged on different sections of the flaw detector, as connected by a Cardan suspension, which results in errors during measuring flaw geometries.

The closest prototype of the claimed invention is the ROSEN magnetic flaw detector, as described by Markus B rors & Thomas Beuker in the presentation "Combined in-Line Inspection in the Context of Pipeline Integrity" on September 22, 2011, which determines deformations in a pipe inner wall geometry and association of a flaw with the pipe inner wall by using two rings with sensor units, each ring being arranged on a separate section, that are connected by a Cardan connection. The sensor operation is based on the principle of eddy current excitation in the pipe wall. Inner wall geometry deformations and inner flaws cause changes in distribution of eddy currents, which changes are detected by the receiving coil. Outer flaws do not influence the sensor operation because eddy currents are concentrated in an area near the skin layer, and a pipe wall magnetization field is practically absent. The algorithm of determining flaw dimensions by programs of data post-processing depends on a "inner/outer" type of a flaw. The main drawback of this solution is that the ring with Hall sensor units and the ring with eddy-current units are arranged on different sections of the flaw detector that are connected by a Cardan connection, which results in errors during measuring flaw geometries.

The technical effect consists in reducing errors while measuring flaw geometries, improving reliability of the flaw detector passage through pipes with a complex geometry due to a reduction in a number of sections and due to arrangement of a magnetic measuring system on one section.

This technical effect is achieved to the fact that the magnetic measuring system for a flaw detector with longitudinal magnetization, as based on combined sensor units, consists of combined sensor units arranged on a magnetic conductor of the single-section flaw detector with the use of a ring of movable brackets between two rings of opposite polarity magnets and elements transmitting a magnetic flux to the pipeline inner wall. One unit of combined sensors of the magnetic measuring system for a flaw detector with longitudinal magnetization, as based on combined sensor units, enables to detect flaws in a stray field arising in their locations, associate a flaw with deformations in the pipeline inner wall geometry, which are related to dents, transverse welds, etc. The algorithm of determining flaw dimensions by programs of data post-processing depends on the type of a flaw - "inner/outer" or ID/OD. One unit of combined sensors consists of eddy-current sensors, Hall sensors measuring the transverse component of magnetic field inductance, and Hall sensors measuring the longitudinal component of magnetic field inductance. An eddy-current sensor comprises two inductance coils combined into a module and arranged co-axially, one above the other. The inductance coils are elements of a bridge connected to a high-frequency generator. One inductance coil of this pair is the reference coil, since it is put into a shielded compartment isolated from the external environment in respect of electromagnetic current. When a distance is measured from the inductance coil to the pipe surface that is associated with an inner flaw, the location of a dent or other deformations of the pipe inner surface geometry, the coil inductance is changed, which results in violation of the bridge balance and appearance of a signal at the output of the differential amplifier. A change in inductance is linked with appearance of eddy currents on the pipeline inner surface, which currents change an electromagnetic flux going through the inductance coil that is not isolated from the external environment. Inductance of the non-isolated inductance coil is compared to reference inductance, and, thus, a flaw is detected. Voltage from the bridge is fed to phase detectors, from the detectors to the differential amplifier. In order to minimize influence of a change in a skin layer thickness on a change in the coil inductance and form a false signal, an operating frequency of the eddy-current sensor is selected so as to be rather high in order the skin layer thickness for steel to be just several microns, which is significantly lower than a depth of a minimum flaw; and in order to minimize interference from outer flaws, an additional voltage phase shift by 30-40° from the inductance coils of the eddy-current sensor is introduced, which is effected by adjusting resonance of the L1C1 and L2C2 series circuits of the bridge to a value below the generator excitation frequency. Interference from an outer flaw and a desired signal obtain different deviation signs, which may be easily taken into account during processing by the threshold method; and the use of the reference inductance coil L2 enables to reduce influence of the external conditions, i.e., temperature and pressure, significantly. In order to ensure electromagnetic coupling of the coils with the pipe surface, holes closed by ceramic inserts are provided in the protective non-ferromagnetic plate of the combined sensor unit. Two more eddy-current sensors of the combined sensor units are designed similarly. Signals from the Hall sensors measuring the transverse component of the magnetic field inductance and from the Hall sensors measuring the longitudinal component of the magnetic field inductance are progressively switched to an analog-to-digital converter, and signals from various eddy-current sensors are fed through as multiplexor. A parallel digital signal is converted into a serial digital signal at the output of the analog-to-digital converter. This serial digital signal is fed to the multiplexor unit that combines digital flows from the group of the combined sensor units. Then, the digital signal from the multiplexor units is fed to the on-board equipment where it is recorded to a digital medium. The claimed magnetic measuring system for a flaw detector with longitudinal magnetization, as based on combined sensor units, comprises eddy-current sensors that are arranged in the area of a strong magnetic field of the magnetic system (more than 6 KA/m), which ensures that a pipe section between two rings of opposite polarity magnets and elements transmitting a magnetic flow to the pipe inner wall is magnetized to a condition of technical saturation. In these conditions, the eddy-current sensors intended for detecting only inner flaws become sensitive to outer flaws also. The point is that outer flaws may create a significant stray field in the inner space of the pipe, which field modulates a thickness $\delta$ of the skin layer where eddy currents exist:

$$\delta = \frac{1}{\sqrt{\pi f \sigma \mu}}$$

where:

$\sigma$ - conductance of material;

f - frequency of excitation;

$\mu$ - magnetic conductivity or differential magnetic conductivity of pipe material $\mu = db/dH$, where:

b - magnetic inductance;

H - magnetic field strength.

A change in the skin layer thickness results in a change in the coil inductance and forms a false signal. In order to minimize this influence, an operating frequency of the eddy-current sensor is selected so as to be higher than 10 MHz (HF wave band).

Calculations of the magnetic measuring system were performed relative to a scalar magnetic potential numerically, by the finite element method, with the use of the ANSYS software package. The calculations and optimization of the eddy-current sensor on the inductance coils L1 and L2 were also performed with the use of the ANSYS software package be the vector-potential method for harmonic action.

The claimed magnetic measuring system for a flaw detector with longitudinal magnetization, as based on combined sensor units, may be installed on one section of the flaw detector, which reduces the flaw detector material consumption and production cost. Combination of the sensors employed in the magnetic measuring system into the combined sensor units and their arrangement on a ring of movable brackets mounted on a magnetic conductor enables to eliminate measurement errors associated with a backlash of the Cardan connection used for the flaw detector sections. The use of the claimed magnetic measuring system for a flaw detector with longitudinal magnetization, as based on combined sensor units enables to make its dimensions smaller, which, in its turn, improves reliability when the flaw detector passes turns of a pipeline.

The introduction of a reference inductance coil, as placed in a shielded compartment isolated from the external conditions in respect of electromagnetic current, into the bridge of an eddy-current sensor enables to reduce the influence of the external conditions, i.e., temperature and pressure, significantly. Making of the inductance coils in a printed form enables to reduce sensitivity of the eddy-current sensor to pressure exerted by a working medium, which may be as high as 140 atm (14 MPa). All this improves the quality of examining a pipeline by nondestructive methods with the use of a flaw detector with the magnetic measuring system for a flaw detector with longitudinal magnetization, as based on combined sensor units.

Fig. 1 shows the claimed magnetic measuring system for a flaw detector having longitudinal magnetization, as based on combined sensor units, that is mounted on one section of a flaw detector;

Fig. 2 shows a functional diagram illustrating operation of the combined sensor unit;

Fig. 3 shows the combined sensor unit as viewed from the pipe wall and a section along the pipe radial plane;

Fig. 4 shows a sectional view of the inductance coil module of the eddy-current sensor included in the combined sensor unit;

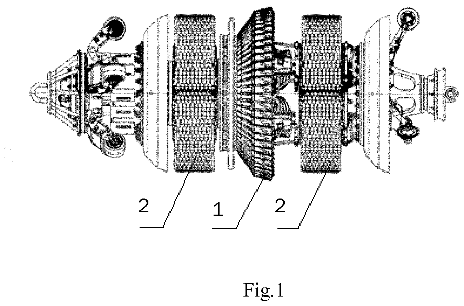

The following designations are used in Fig. 1b:

1 - combined sensor units mounted on movable brackets forming a ring;

2 - elements transmitting magnetic flux from opposite polarity magnets to pipe inner wall.

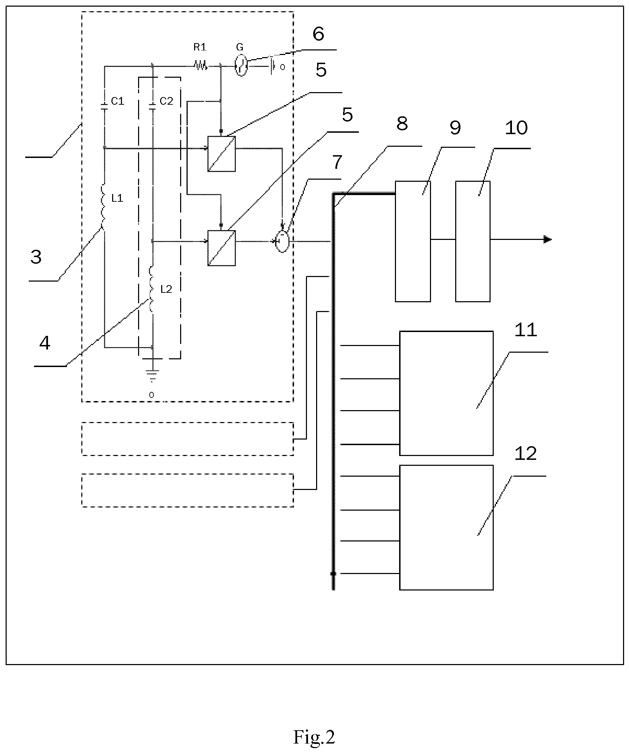

The following designations are used in Fig. 2:

3 - inductance coil L1;

4 - reference inductance coil L2 placed in shielded compartment isolated from external conditions in respect of electromagnetic current;

5 - phase detectors;

6 - high frequency generator;

7 - differential amplifier;

8 - multiplexor chip in functional representation;

9 - analog-to-digital converter;

10 - code converter;

11 - Hall sensors measuring transverse component of magnetic field inductance;

12 - Hall sensors measuring longitudinal component of magnetic field inductance.

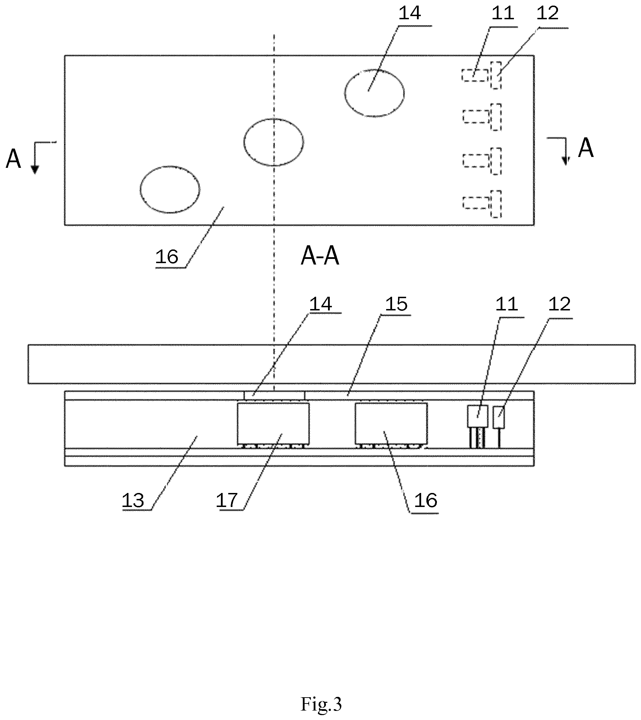

The following designations are used in Fig. 3:

11 - Hall sensors measuring transverse component of magnetic field inductance;

12 - Hall sensors measuring longitudinal component of magnetic field inductance;

13 - compound seal;

14 - ceramic inserts;

15 - protective non-ferromagnetic plate covered with a wear-resistant coating;

16 - printed circuit board;

17 - inductance coil module of eddy-current sensor included into combined sensor unit.

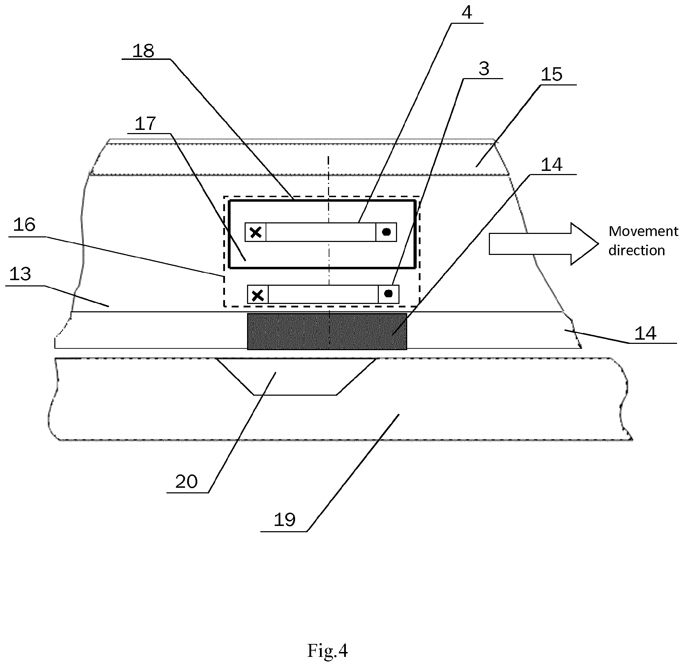

The following designations are used in Fig. 4:

3 - inductance coil L1;

4 - reference inductance coil L2 placed into shielded compartment isolated from external conditions in respect of electromagnetic current;

12 - compound seal;

13 - ceramic insert;

15 - protective non-ferromagnetic plate;

16 - printed circuit board;

17 - inductance coil module of eddy-current sensor included into combined sensor unit;

18 - shielded compartment isolated from external conditions in respect of electromagnetic current with reference inductance coil arranged therein;

19 - examined pipeline;

20 - flaw identified.

In the claimed magnetic measuring system, as based on combined sensor units mounted on one section of the flaw detector, the sensors respond when the flaw detector moves along a pipeline.
The claimed magnetic measuring system, as based on combined sensor units, comprises a cylindrical magnetic conductor on which, between two rings of opposite polarity magnets, a ring of movable brackets that are equally spaced circumferentially is arranged, the combined sensor units 1 being secured thereto (Fig. 1). A magnetic flux is transmitted from the magnets to the pipeline wall with the aid of elements 2 (Fig. 1). One unit of combined sensors consists of eddy-current sensors, Hall sensors 11 (Figs. 2 and 3) measuring the transverse component of magnetic field inductance, and Hall sensors 12 (Figs. 2 and 3) measuring the longitudinal component of magnetic field inductance. The eddy-current sensor consists of two inductance coils 3 and 4 (Figs. 2, 3 and 4) combined in a module 16 (Fig. 4) and arranged coaxially, one over the other. The inductance coils 3 and 4 (Figs. 2, 3 and 4) are elements of a bridge that is connected to a high frequency generator 6 (Fig. 2). Voltage is fed from the bridge to phase detectors 5 (Fig. 2) and from the detectors to a differential amplifier 7 (Fig. 2). Two more eddy-current channels of the combined sensor units have the similar structure. Signals from various eddy-current sensors are progressively fed to an analog-to-digital converter 9 (Fig. 2) via a multiplexor 8 (Fig. 2). Also, signals from the Hall sensors 11 (Fig. 2) measuring the transverse component of magnetic field inductance and the Hall sensors 12 (Fig. 2) measuring the longitudinal component of magnetic field inductance are progressively fed to the analog-to-digital converter. This parallel digital code from the output of the analog-to-digital converter 9 (Fig. 2) is converted by a converter 10 (Fig. 2) into serial code. A digital signal is passed via a cable from the output of the converter 10 (Fig. 2) to the multiplexor 8 (Fig. 2) that combines digital flows coming from the group of the combined sensor units. Further, the digital signal is passed from the multiplexor 8 (Fig. 2) to an on-board equipment unit where it is recorded to a digital medium. When a distance from the inductance coil L1 3 (Fig. 2) to the pipeline surface is changed due to an inner flaw, a dent location or another deformation of the pipe inner surface geometry, the inductance of the coil L1 3 (Fig. 2) is also changed which results in unbalancing of the bridge and appearance of a signal at the output of the differential amplifier 7 (Fig. 2). A change in inductance is related to appearance of eddy currents on the pipe inner surface, which currents change an electromagnetic flux passing through the inductance coil 3 (Fig. 2). Inductance of the coil 3 (Figs. 2, 3 and 4) is compared to inductance of the coil 4 (Figs. 2 , 3 and 4), and, thus, a flaw is detected. As to its structure, the combined sensor unit consists of a printed circuit board 16 (Figs. 3 and 4) on which the microchips of the Hall sensors 11 (Fig. 3) for measuring the transverse component are arranged, a printed circuit board for the Hall sensors 12 (Fig. 3) for measuring the longitudinal component of magnetic field induction, the printed inductance coil modules 17 (Figs. 3 and 4), and other schematic elements. The combined sensor unit is sealed with a compound 13 (Figs. 3 and 4). on the side of the Hall sensors 11 and 12 (Fig. 3) a protective non-ferromagnetic plate 15 is glued (Fig. 3 and Fig. 4) which slides along the pipeline wall. The plate 15 (Figs. 3 and 4) is provided with three holes closed by ceramic inserts 14 (Fig. 3 and Fig. 4). The inductance coil modules 17 are arranged on the plate 16 coaxially with the inserts 14 (Figs. 3 and 4). One of the inductance coils 4 (Fig. 4) is the reference one and is arranged in a shielded compartment 18 (Fig. 4). The other inductance coil 3 (Fig. 4) is not isolated and is arranged over the ceramic insert 14 (Fig. 4). Inductance of the non-isolated inductance coil 3 (Figs. 3 and 4) is compared to inductance of the reference coil 4 (Figs. 3 and 4), and, thus, a flaw is detected (Fig. 4) in a pipeline 19 (Fig. 4). The inductance coil module is sealed with the compound 13 (Figs. 3 and 4).

## Claims

1. A magnetic measuring system for an in-pipeline flaw detector with longitudinal magnetization and based on combined sensor units (1), said system measuring distribution of a stray magnetic field of flaws in a pipe wall (19) by using sensor units (1) arranged on a ring, **characterized in that** the combined sensor units (1) are mounted on a cylindrical magnetic conductor of a single-section flaw detector between two rings of magnets (2) having opposite polarity and elements transmitting a magnetic flux to a pipeline inner wall (19), wherein at least one of said combined sensor units (1) comprises

   - at least one eddy-current sensor, and
   - at least one Hall sensor (11) for measuring a transverse component of the magnetic field, and
   - at least one Hall sensor (12) for measuring a longitudinal component of the magnetic field, and wherein the eddy-current sensor comprises two inductance coils (3, 4) combined in a module (16) and arranged co-axially, one over the other and separated along the axial direction, wherein the inductance coils are elements of a bridge circuit connected to a generator (6), the inductance coil (4) being a reference inductance coil arranged in a shielded compartment (18) isolated from external environment in respect of electromagnetic current, and the inductance coil (3) is arranged closer to the pipeline (19) than the reference inductance coil (4), and further **characterized in that** there is an additional phase shift of 30-40° of voltage between the inductance coils (3, 4) of the eddy-current sensor, wherein the resonance of the elements of said bridge circuit is configured to be lower than the generator excitation frequency.

2. The magnetic measuring system according to Claim 1, **characterized in that** the inductance coils (3, 4) are made in a printed form, and, in order to ensure electromagnetic coupling between the inductance coils (3, 4) and a pipeline surface (19), the combined sensor unit (1) is provided with a protective non-ferromagnetic plate (15) having holes closed by ceramic inserts (14).

3. The magnetic measuring system according to Claim 1, **characterized in that** the eddy-current sensor is configured to operate at frequencies higher than 10 MHz.

## Patentansprüche

1. Magnetmesssystem für einen in einer Rohrleitung befindlichen Prüfdetektor mit longitudinaler Magnetisierung und basierend auf kombinierten Sensoreinheiten (1), wobei besagtes System die Verteilung eines magnetischen Streufeldes von Schwachstellen in einer Rohrwand (19) mittels auf einem Ring angeordneten Sensoreinheiten (1) misst, **dadurch gekennzeichnet, dass** die kombinierten Sensoreinheiten (1) auf einem zylindrischen magnetischen Leiter eines Einzelsektions-Schwachstellendetektors zwischen zwei Ringen von Magneten (2) mit entgegengesetzter Polarität und Elementen, die einen magnetischen Fluss auf eine Rohrleitungsinnenwand (19) übertragen, angebracht sind, wobei mindestens eine der besagten kombinierten Sensoreinheiten (1) umfasst

   - mindestens ein Wirbelstromsensor und
   - mindestens einen Hall-Sensor (11) zum Messen einer transversalen Komponente des Magnetfeldes und

- mindestens einen Hall-Sensor (12) zum Messen einer longitudinalen Komponente des Magnetfelds, und wobei der Wirbelstromsensor zwei Induktionsspulen (3, 4) umfasst, die in einem Modul (16) kombiniert und koaxial, eine über der anderen und entlang der axialen Richtung separat, angeordnet sind, wobei die Induktionsspulen Elemente einer mit einem Generator (6) verbundenen Brückenschaltung sind, die Induktionsspule (4) eine Referenz-Induktionsspule ist, die in einem abgeschirmten Raum (18) angeordnet ist, der hinsichtlich des elektromagnetischen Stroms von der äußeren Umgebung isoliert ist, und die Induktionsspule (3) näher an der Rohrleitung (19) liegt als die Referenz-Induktionsspule (4), und ferner **dadurch gekennzeichnet, dass** eine zusätzliche Spannungs-Phasenverschiebung von 30-40° zwischen den Induktionsspulen (3, 4) des Wirbelstromsensors vorhanden ist, wobei die Resonanz der Elemente der besagten Brückenschaltung eingerichtet ist niedriger zu sein als die Generatortaktfrequenz.

2. Magnetmesssystem nach Anspruch 1, **dadurch gekennzeichnet, dass** die Induktionsspulen (3, 4) in einer gedruckten Form hergestellt sind, und um eine elektromagnetische Kopplung zwischen den Induktionsspulen (3, 4) und einer Rohrleitungsoberfläche (19) sicherzustellen, ist die kombinierte Sensoreinheit (1) mit einer schützenden nichtferromagnetischen Platte (15) versehen, die durch keramische Einsätze (14) geschlossene Löcher aufweist.

3. Magnetmesssystem nach Anspruch 1, **dadurch gekennzeichnet, dass** der Wirbelstromsensor eingerichtet ist um bei Frequenzen über 10 MHz zu arbeiten.

**Revendications**

1. Système de mesure magnétique pour un détecteur de défauts dans un pipeline avec magnétisation longitudinale et basé sur des unités de détection combinées (1), ledit système mesurant la distribution d'un champ magnétique parasite de défauts dans une paroi d'un conduit (19) en utilisant des unités de détection (1) disposées sur un anneau, **caractérisé en ce que** les unités de détection combinées (1) sont montées sur un conducteur magnétique cylindrique d'un détecteur de défauts de section unique entre deux anneaux d'aimants (2) ayant une polarité opposée et des éléments transmettant un flux magnétique à une paroi interne d'un pipeline (19), au moins l'une desdites unités de détection combinées (1) comprenant :

- au moins un capteur de courants de Foucault, et
- au moins un capteur de Hall (11) pour mesurer une composante transversale du champ magnétique, et
- au moins un capteur de Hall (12) pour mesurer une composante longitudinale du champ magnétique, le capteur de courants de Foucault comprenant deux bobines d'inductance (3, 4) combinées pour former un module (16) et disposées coaxialement, l'une au-dessus de l'autre et séparées le long de la direction axiale, les bobines d'inductance étant des éléments d'un circuit en pont connecté à un générateur (6),

la bobine d'inductance (4) étant une bobine d'inductance de référence disposée dans un compartiment blindé (18) isolé de l'environnement extérieur par rapport aux courants électromagnétiques, et la bobine d'inductance (3) étant disposée plus près du pipeline (19) que la bobine d'inductance de référence (4), et **caractérisé en outre en ce qu'**il existe un déphasage supplémentaire de 30-40° de tension entre les bobines d'inductance (3, 4) du capteur de courants de Foucault, la résonance des éléments dudit circuit en pont étant configurée pour être inférieure à la fréquence d'excitation du générateur.

2. Système de mesure magnétique selon la revendication 1, **caractérisé en ce que** les bobines d'inductance (3, 4) sont fabriquées sous forme imprimée et, afin de garantir un couplage électromagnétique entre les bobines d'inductance (3, 4) et une surface de pipeline (19), l'unité de détection combinée (1) est pourvue d'une plaque non-ferromagnétique protectrice (15) présentant des trous fermés par des inserts en céramique (14).

3. Système de mesure magnétique selon la revendication 1, **caractérisé en ce que** le capteur de courants de Foucault est configuré pour fonctionner à des fréquences supérieures à 10 MHz.

2      1    2

Fig.1

Fig.2

14 11 12

A A

16

A-A

14 15 11 12

13 17 16

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011167914 A1
- US 2002027437 A1
- GB 2376077 A

**Non-patent literature cited in the description**

- **MARKUS B RORS ; THOMAS BEUKER.** *Combined in-Line Inspection in the Context of Pipeline Integrity,* 22 September 2011